# EUROPÄISCHE PATENTSCHRIFT

(11) **EP 2 527 792 B1**
(45) Veröffentlichungstag und Bekanntmachung des Hinweises auf die Patenterteilung: **12.03.2014**
(21) Anmeldenummer: 11004366.8
(22) Anmeldetag: 27.05.2011
(51) Int. Cl.: G01C 23/00, G01S 17/89, G01S 7/22, G01S 7/24, G01S 7/51, G01S 13/94, G01S 7/06

(54) **Verfahren zur Pilotenunterstützung für die Landung eines Luftfahrzeugs unter Sichtbehinderungen**
Method for supporting a pilot when landing an aircraft in case of restricted visibility
Procédé d'assistance au pilote pour l'atterrissage d'un aéronef en cas de visibilité réduite

(43) Veröffentlichungstag der Anmeldung: 28.11.2012
(73) Patentinhaber: EADS Deutschland GmbH, 85521 Ottobrunn (DE)
(72) Erfinder: Münsterer, Thomas, Dr., 88069 Tettnang (DE); Kielhorn, Peter, 88048 Friedrichshafen (DE); Wegner, Matthias, 88048 Firedrichshafen (DE)
(74) Vertreter: Meel, Thomas

(56) Entgegenhaltungen:
- EP-A1- 1 650 534
- EP-A2- 1 972 896
- WO-A1-2011/012102
- WO-A2-2005/015333
- WO-A2-2009/081177

## Beschreibung

Hubschrauberlandungen unter eingeschränkten Sichtverhältnissen stellen eine enorme körperliche und mentale Belastung für die Piloten dar und bergen ein stark erhöhtes Unfallrisiko. Dies gilt insbesondere für Nachtlandungen, Landungen bei Nebel oder Schneefall sowie Landungen in ariden Gegenden, die zum sogenannten Brownout führen. Dabei versteht man unter Brownout einen durch den Rotorabwind des Hubschraubers bedingte Effekt, der zu einem vollständigen Verlust der Außensicht innerhalb von Sekundenbruchteilen führen kann. Einen ähnlichen Effekt kennt man bei Landungen auf losem Schnee, der Whiteout genannt wird. Unterstützungssysteme für die oben angeführten Risikoszenarien sollen generell so konzipiert sein, dass es den Piloten ihr gewohntes Anflugverhalten erhält, dieses gegebenenfalls unterstützt, ihnen aber bei Verlust der Außensicht notwendige Hilfsmittel an die Hand gibt, um sicher zu landen.

Bekannte Verfahren zur Pilotenunterstützung verwenden eine in das Helmsichtsystem des Piloten eingespiegelte Symbolik. Der Pilot kann so während des gesamten Landevorgangs die Landezone beobachten, bekommt dabei aber in diese Außensicht für den Landevorgang wichtige Informationen, wie Drift, Höhe über Grund oder einen Referenzpunkt in das Helmsichtsystem eingeblendet. Untersuchungen der Arbeitsbelastung von Piloten bei Landungen unter eingeschränkten Sichtverhältnissen ergaben, dass die gleichzeitige Koordination von realer Außensicht und 2-dimensionalen Symbolen schwierig ist. Es erfordert ein hohes Maß an Aufmerksamkeit, alle für die Landung wichtigen Informationen gleichzeitig aus verschiedenartigen Symbolen zu verarbeiten. Deshalb neigen Piloten unter dem Stress, den eine solche Landung besonders unter militärischen Einsatzbedingungen hervorruft, zur Vernachlässigung einzelner Anzeigeinformationen. Gefordert wird deshalb eine Anzeigesymbolik, welche intuitiv die wichtigsten Flugparameter, wie Drift, Lage im Raum und Höhe über Grund, möglichst ähnlich einer normalen Landung unter Sichtflugbedingungen vermittelt. Dies kann grundsätzlich durch mit der Außensicht konforme Symbole und graphische Strukturen/Objekte erreicht werden, die in das Helmsichtsystem eingeblendet werden. Für eine solche außensichtkonforme Symbolik muss auch die Blickrichtung des Helmsichtsystems für die Darstellung kompensiert werden (Kompensation der Kopfbewegung).

Durch eine außensichtkonforme Symbolik kann dem Piloten z.B. der Landepunkt während des Anflugs und während der Landung so dargestellt werden, als läge die entsprechende Landepunktmarkierung, d.h. das entsprechende Symbol, in der realen Außenwelt auf der Landefläche. Ebenso können zusätzliche synthetische Referenzobjekte sowie Abbilder von realen Hindernissen als Orientierungshilfe für den Piloten in das Helmsichtsystem eingeblendet werden.

Es existieren bereits verschiedene Ansätze, um eine außensichtkonforme Symbolik des vorgesehenen Landepunkts im Helmsichtsystem darzustellen.

WO 2009/081177 A2 beschreibt ein System und ein Verfahren, mit dem der Pilot mittels des Helmsichtsystems durch Fokussierung auf einen angestrebten Landepunkt und Auslösung eines Triggers diesen markieren und registrieren kann. Der beschriebene Ansatz nutzt dazu den Sichtstrahl des Helmsichtsystems, Daten einer Navigationseinheit und eines Höhenmessers. Zusätzlich wird die Bodenfläche der Landezone entweder als eben oder als durch Datenbankinformationen berechenbar angenommen. Es wird vorgeschlagen, auf die angenommene Bodenfläche des Landeplatzes eine Landeplatzmarkierung, sowie synthetische dreidimensionale Referenzstrukturen, bevorzugt in Form von Kegeln, im Helmsichtsystem außensichtkonform darzustellen.

In einer Variante des Verfahrens wird noch zusätzlich ein Entfernungsmesser zur Stabilisierung der Festlegungsfunktion des Landeplatzes eingesetzt. Die Verwendung von 3D-Sensoren wird nur im Zusammenhang mit der Detektion von Hindernissen in oder neben der Landezone und zur Erzeugung einer zusätzlichen synthetischen Sicht auf einem Multifunktionsdisplay aufgeführt.

Dieses bekannte Verfahren beschreibt darüber hinaus ein Verfahren zur Minimierung von Messfehlern, die zu Fehlern in der Darstellung der Symbolik führen. Dabei werden allerdings Elevationsfehler und Spezifikationslücken bei den verwendeten Datenbanken nicht erwähnt. Vielmehr schlägt das Verfahren eine mehrfache Markierung des Landeplatzes vor, so lange bis das Ergebnis zufriedenstellend ist. Dies ist zum einen von der Arbeitsbelastung und der notwendigen Änderung des Standardanflugverfahrens negativ und nützt nichts bei bestimmten in realen Systemen vorhandenen Fehlern (z.B. Sprung der Positionsdaten bei einem GPS Positionsupdate). Ebenfalls nachteilig ist die technische Komplexität bei Verwendung eines Entfernungsmessers, der naturgemäß auf die Sichtlinie des Helmsichtsystems ausgerichtet sein muss, also auf einer sehr präzisen in zwei Achsen drehbaren Plattform sitzen muss.

In Goff et. al., Developing a 3-D Landing Symbology Solution for Brownout, Proceedings of the American Helicopter Society 66th Annual Forum, Phoenix, AZ., May 11-13, 2010 wird zur Unterstützung des Piloten das Gitternetz der Bodenfläche einer vorhandenen Elevationsdatenbank im Helmsichtsystem dargestellt, welches über ein präzises Navigationssystem und eine Messung der Höhe über Grund referenziert wurde. Ebenso wie in der WO 2009/081177 A2 beschrieben, werden auf diese Bodenfläche synthetische 3-dimensionale Strukturen (in diesem Fall allerdings quaderförmige Türme) als Orientierungshilfe für den landenden Piloten in das Helmsichtsystem projiziert. Diese synthetische Szenerie wird dem Piloten konform zu seiner realen Außensicht in ein Helmsichtsystem eingeblendet und bewegungskompensiert.

Ähnlich wie in der WO 2009/081177 A2 wird auch hier die Möglichkeit geboten, den Landeplatz mittels eines Fadenkreuzes in der Mitte des Sichtfeldes des Helmsichtsystems aus einer größeren Entfernung (zwischen 600 und 1000 m) zu markieren. Aus dem Schnittpunkt der Geraden des Blickwinkels des Helmsichtsystems und der datenbankbasierten Bodenfläche ermittelt ein Computer die Absolutposition des zu erreichenden Landepunktes.

Nachteilig bei diesem Verfahren ist die notwendige Verwendung von Elevationsdatenbanken, deren Verfügbarkeit und Genauigkeiten sehr eingeschränkt sind. Spezifikationsgemäß hat beispielsweise eine Geländedatenbank der Auflösungsstufe DTED Level 2, d.h. einem Stützpunktabstand von ca. 30 m, einen Höhenfehler von bis zu 18 m und einen lateralen Ablagefehler der einzelnen Stützpunkte der Datenbank von bis zu 23 m. Nachteilig wirkt sich ebenfalls aus, dass bei der Nutzung von Datenbanken eine Kenntnis der aktuellen Absolutposition des Luftfahrzeugs notwendig ist. Bei Navigationssystemen, die nicht über eine Differential GPS Stützung verfügen, kommt so noch ein zusätzlicher Positionsfehler von mehreren Metern hinzu. Um das beschriebene Verfahren für Landezwecke überhaupt sinnvoll nutzen zu können, muss eine sogenannte Höhenreferenzierung der Datenbankdaten mittels eines zusätzlichen Höhensensors vorgenommen werden. Dabei wird im Anflug die Höhe des Luftfahrzeugs über Grund genau gemessen und der Absoluthöhenwert der gesamten Datenbank so korrigiert, dass die Werte wieder übereinstimmen.

Dieses Verfahren hat die Schwäche, dass der Höhenmesser den Abstand zum nächsten Objekt misst, was aber nicht notwendigerweise der Boden ist, sondern auch typischerweise vorhandene Objekte, wie Büsche oder Bäume sein können. Derartige Objekte sind in der Regel nicht in einer Geländedatenbank vorhanden und somit findet eine Fehlkorrektur statt. Zusätzlich negativ zu vermerken ist, dass sich das Verfahren auf die für diese Skala nicht spezifizierte Eigenschaft der relativen Höhengenauigkeit zwischen verschiedenen Datenbankpunkten der Datenbank verlässt. Die typischerweise fehlende Aktualität der Datenbankdaten ist ein weiterer Nachteil des Verfahrens.

Die beschriebenen Nachteile stellen eine deutliche operative Schwäche des Verfahrens dar, da die darzustellenden Symbole häufig Höhenfehler aufweisen, d.h. die Symbole schweben für den Piloten entweder in der Luft oder versinken im Boden und kurzfristige Veränderungen der Landezone werden nicht berücksichtigt.

Die beschriebenen Systeme stellen außensichtkonforme Symbole visuell dar, die dem Piloten bei einer Landung unter verminderten Sichtbehinderungen im Brownout oder Whiteout unterstützen sollen. Als Projektionsfläche, auf die die synthetischen Symbole gestellt werden, wird beim Stand der Technik allerdings eine Ebenenannahme oder eine Geländedatenbank verwendet. Die Verfügbarkeit und Genauigkeit von Elevationsdatenbanken ist jedoch für Landezwecke unzureichend. Die Verwendung von Geländedatenbanken macht darüber hinaus die Verwendung von Navigationsanlagen mit einer hohen Absolutgenauigkeit der Eigenposition notwendig, was sich nachteilig auf die Kosten eines solchen Systems auswirkt.

In der DE 10 2004 051 625 A1 ist eine Hubschrauberlandehilfe speziell für Brownout- und Whiteout-Bedingungen beschrieben, bei dem während des Brownouts bzw. Whiteouts auf einem Display eine synthetische 3D-Ansicht der Umgebung in der Perspektive des Piloten dargestellt wird, wobei die virtuelle Ansicht auf der Basis von 3D-Daten, die beim Landeanflug vor Einsetzen des Brownouts akkumuliert wurden, generiert wird. Eine Anzeige von der synthetischen Außensicht überlagerten Symbolen ist nicht vorgesehen.

In der EP 1 972 896 A2 ist ein Verfahren zur Pilotenunterstützung bei Start und Landung eines Fluggeräts bei verminderter Außensicht bekannt, bei der im Landebereich eine 3D-Bodenfläche als Approximation der lokalen Topographie des Erdbodens dargestellt ist, wobei zusätzlich auch Nicht-Bodenobjekte oberhalb der 3D-Bodenfläche dargestellt sind. Die Erzeugung der 3D-Bodenfläche einschließlich der Nicht-Bodenobjekte erfolgt während des Anflugs mittels eines luftfahrzeugseitigen 3D-Sensors.

Die W02005/015333 A2 beschreibt ein Helmsichtsystem mit Bewegungskompensation an Bord eines Helikopters.

Es ist Aufgabe der vorliegenden Erfindung, ein Verfahren zur Pilotenunterstützung insbesondere für die oben angeführten Risikoszenarien Brownout und Whiteout zu schaffen, bei dem die Darstellung des gewählten Landepunkts mit hoher Genauigkeit und auf aktueller Datenbasis dargestellt wird.

Diese Aufgabe wird mit den Verfahren nach den Patentansprüchen 1 und 13 gelöst. Vorteilhafte Ausführungen sind Gegenstand von Unteransprüchen.

Die vorliegende Erfindung beschreibt eine Symbologie zur Darstellung des vorgesehenen Landepunkts, dargestellt in einem Helmsichtsystem, die der realen Außensicht des Piloten konform überlagert wird. Die Symbole werden innerhalb einer synthetischen 3D-Darstellung des Geländes außensichtkonform platziert. Die Darstellung im Helmsichtsystem erfährt dabei eine positions- und höhengerechte Größen-, Ausrichtungs- und Proportionsanpassung entsprechend der Sicht des Piloten. Erfindungsgemäß werden die 3D-Daten der Geländefläche während des Landeanflugs von einem aktiven, luftfahrzeuggestützten 3D-Sensor erzeugt.

Da die Festlegung des Landepunkts unter Einsatz des Helmsichtsystems zusammen mit dem aktiven 3D-Sensor erfolgt, ist die Genauigkeit der Positionierung im Vergleich zum Stand der Technik deutlich erhöht. Da sowohl Helmsichtsystem als auch 3D-Sensor ihre Darstellung, bzw. Messungen im selben luftfahrzeugfesten Koordinatensystem vornehmen, werden dafür vorteilhaft nur relative Genauigkeiten einer luftfahrzeugeigenen Navigationsanlage benötigt. Dies ist insbesondere vor dem Hintergrund von großer Bedeutung, dass der Landeanflug eines Helikopters insbesondere im militärischen Einsatz typischerweise aus relativ geringer Flughöhe erfolgt. Das wiederum bedeutet, dass der Pilot einen entsprechend flachen Sichtwinkel auf die Landezone hat. Ein Fehler in der Winkelmessung bei der Markierung des Landepunkts mittels Helmsichtpeilung wirkt sich unter diesen Bedingungen verstärkt auf die Genauigkeit bei der Positionsbestimmung in Flugrichtung aus.

Darüber hinaus sorgt der Einsatz des 3D-Sensors zur Darstellung der Geländefläche für eine hochgenaue und vor allem aktuelle Wiedergabe der Verhältnisse am Landepunkt, die eine Geländedatenbank naturgemäß nicht liefern kann.

Als 3D-Sensor wird vorzugsweise ein Ladar oder ein hochauflösendes mm-Wellen-Radar verwendet. Darüber hinaus sind jedoch auch sonstige Verfahren zur Erzeugung von hochgenauen 3D-Daten der Szenerie vor dem Luftfahrzeug im Rahmen der vorliegenden Erfindung nutzbar.

In einer speziellen Ausführung werden lediglich die Daten einer 3D-Messzeile eines 3D-Sensors ermittelt, wobei durch die Vorwärtsbewegung des Luftfahrzeugs eine flächige Abtastung der Landezone erreicht wird (sog. Pushbroom Verfahren).

Alternativ ist auch die Verwendung eines 2D-Kamerasystems zur Ermittlung der Tiefeninformation bei bekanntem Lageversatz zwischen den einzelnen Bildern durch bekannte Bildverarbeitungsalgorithmen, z.B. "Depth from motion" oder Stereoskopie, möglich. Das komplette System aus Kamera und Bildverarbeitung ergibt dann wiederum einen 3D-Sensor im Sinne der vorliegenden Erfindung.

In vorteilhafter Ergänzung des erfinderischen Konzepts können aus den 3D-Daten des aktiven 3D-Sensors zusätzliche visuelle Referenzen in Form von dreidimensionalen graphischen Strukturen erzeugt werden. Diese werden von den erhabenen Nicht-Bodenobjekten (z.B. Gebäude, Mauern, Fahrzeuge, Bäume etc.) durch geometrische Vereinfachung abgeleitet und in die Helmsicht perspektivisch eingeblendet.

Die graphischen Strukturen zur Darstellung von Nicht-Bodenobjekten, wie z.B. Quader, Zylinder oder Kegel, bilden ein außensichtkonformes, vereinfachtes Abbild von realen Objekten in der direkten Umgebung der Landezone und dienen als zusätzliche, wirklichkeitsnahe Orientierungshilfen.

Die Erfindung wird im folgenden anhand von konkreten Ausführungsbeispielen unter Bezugnahme auf entsprechende Figuren näher erläutert. Es zeigen:
- Fig. 1: eine schematische Übersicht eines Systems zur Realisierung des erfindungsgemäßen Verfahrens;
- Fig. 2: ein Ablaufplan zur Markierung und Festlegung des Landepunkts mittels Helmsichtpeilung;
- Fig. 3: eine Skizze der geometrischen Verhältnisse bei der Markierung der Landezone während des Anflugs;
- Fig. 4: eine Ansicht der Messpunktwolke des 3D-Sensors am Ort des Schnittpunkts mit dem Sichtstrahl des Helmsichtsystems;
- Fig. 5: eine Ansicht der Messpunktwolke am Ort des Schnittpunkts mit hervor- gehobenen Scanzeilen des 3D-Sensors;
- Fig. 6: eine Ansicht der Messpunktwolke am Ort des Schnittpunkts mit für die Bodenflächenapproximation ausgewählten Messpunkten;
- Fig. 7: eine Ansicht der Messpunktwolke am Ort des definierten Landepunktes mit für die Bodenflächenapproximation ausgewählten Messpunkten innerhalb eines Kreises um den definierten Landepunkt;
- Fig. 8: eine Skizze des Verarbeitungswegs von der Messpunktauswahl über die Bodenflächenapproximation zur Projektion einer Landesymbolik auf diese Bodenfläche bis hin zur Rücktransformation dieser Landesymbolik in ein luftfahrzeugfestes Koordinatensystem;
- Fig. 9: eine exemplarische Darstellung des Landepunktsymbols zusammen mit Standard-Flugführungssymbolen im Helmsichtsystem;
- Fig. 10: eine exemplarische Darstellung des Landepunktsymbols und einer zusätzlichen, auf realen Gegenständen im Bereich der Landezone basierenden Orientierungshilfe zusammen mit Standard-Flugführungssymbolen im Helmsichtsystem;
- Fig. 11: eine exemplarische Darstellung des Landepunktsymbols mit zusätzlichen, rein virtuellen Orientierungshilfen (Windsack, Gleitwinkelfeuer).

### Systemaufbau:

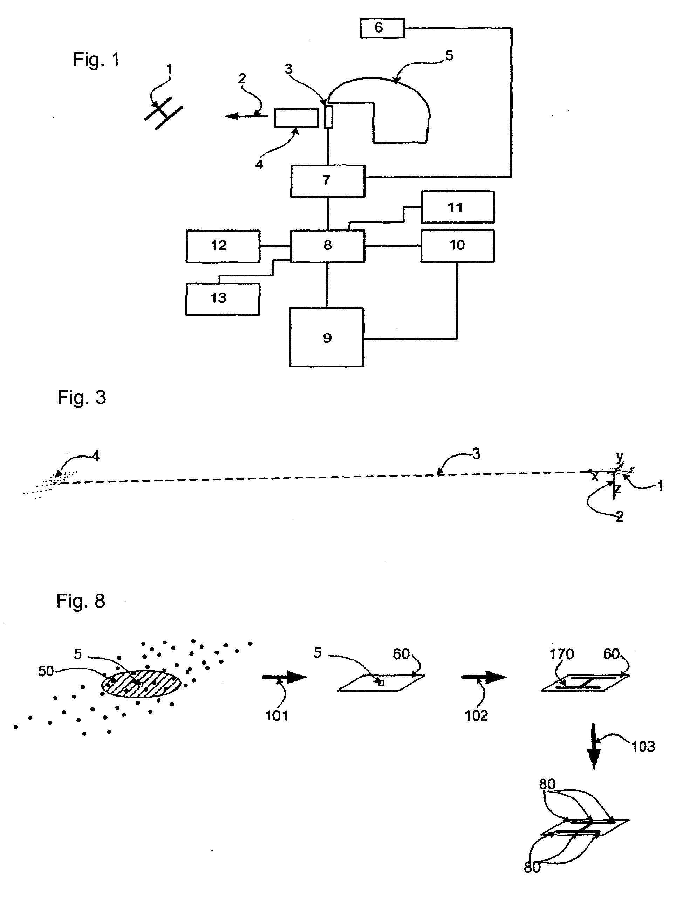

Fig. 1 zeigt den Systemaufbau für die Durchführung des erfindungsgemäßen Verfahrens in schematischer Darstellung.

Der Pilot beobachtet eine Landezone 1 durch ein Helmsichtsystem 3, welches an einem Helm 5 befestigt ist. Ein Helmsichtsystem im Sinne der vorliegenden Erfindung schließt dabei Darstellungssysteme für ein Auge aber auch für den gesamten Sichtbereich ein. Die Technik der Bilderzeugung auf dem Helmsichtsystem ist dabei nicht entscheidend. Die Sichtlinie des Piloten ist mit Bezugsziffer 2 bezeichnet. Zusätzlich kann die Außensicht für den Piloten durch bildverstärkende Elemente 4 (sog. NVGs) z.B. nachts verbessert werden. Die Kopfbewegung des Piloten wird durch ein Detektionssystem 6 der räumlichen Lage des Kopfes, bzw. des Helms und damit des Helmsichtsystems gemessen. Dadurch wird gewährleistet, dass die Sichtlinie des Piloten und damit des Helmsichtsystems gemessen wird. Diese Daten gehen typischerweise zu einer Rechnereinheit 7 des Helms, die für die Darstellung der Symbolik auf dem Helmsichtsystem und für die Darstellungskompensation der Kopfbewegung verantwortlich ist. Diese Rechnereinheit 7 kann entweder direkt ein Teil des Helmsichtsystems sein oder eine eigenständige bauliche Einheit darstellen. Die Landezone wird gleichzeitig kontinuierlich von einem 3D-Sensor 9 erfasst. Die Daten des 3D- Sensors werden vorteilhaft sowohl in einem luftfahrzeugfesten, wie auch in einem lokalen, erdfesten Relativkoordinatensystem gespeichert. Zur Umrechnung zwischen beiden lokalen Koordinatensystemen werden die momentanen Bewegungs- und Körperwinkelmessdaten einer Navigationseinheit 10 genutzt. Diese Daten werden in einer Prozessoreinheit 8 zur Berechnung des angestrebten Landepunkts gemäß dem folgend näher beschriebenen Verfahren und zur Berechnung der Symbolpositionen in luftfahrzeugfesten Koordinaten genutzt. Ebenso werden in der Prozessoreinheit aus den 3D-Daten zusätzliche, aus den erhabenen Nicht-Bodenobjekten abstrahierte Referenzsymbole und deren Relativposition berechnet. Die Daten der Navigationseinheit 10 dienen der geometrischen Nachführung der erzeugten Symbolik in der Prozessoreinheit. Die Prozessoreinheit 8 kann entweder ein eigenständiges Gerät sein oder aber vorteilhaft eine vom 3D-Sensor zur Verfügung gestellte Rechenkapazität. Bezugsziffer 12 bezeichnet einen Trigger, der zur Festlegung des Landepunkts dient und vorteilhaft als Schalter oder Taster an einem der Steuerknüppel des Luftfahrzeugs integriert ist. Zusätzlich besitzt das System optional eine Steuereinheit 13, mit der die Position des ausgewählten Landepunktes im Helmsichtsystem korrigiert werden kann. Diese kann vorteilhaft durch eine Art Joystick an einem der Steuerknüppel ausgeführt sein.

Das erfindungsgemäße Verfahren ist insbesondere für den Einsatz in bemannten und durch einen Piloten gesteuerten Luftfahrzeugen vorgesehen, kann aber auch auf andere Luftfahrzeuge mit erhöhten Automatisierungsgraden angewandt werden. Beispielsweise läge eine erfindungsgemäße Verwendung auch dann vor, wenn der Pilot nur die Festlegung der Landeposition mittels Helmsichtpeilung vornimmt, der Anflug und die Landung dann aber vollautomatisch stattfindet. Dazu müsste lediglich die Position der ausgewählten Landeposition an das Flight Management System (FMS) 11 übermittelt werden. Auch die Verwendung des vorliegenden, erfindungsgemäßen Verfahrens bei einem Fluggerät ohne mitfliegenden Piloten, einer sogenannten Drohne, ist vorgesehen. In diesem Fall würde das Helmsichtsystem vorzugsweise durch ein Kamerasystem für den fernsteuernden Piloten am Boden ersetzt werden. Diesem wird dann ebenfalls die Möglichkeit geboten, die Landeposition analog dem im folgenden beschriebenen Verfahren festzulegen.

### Festlegung des Landepunkts:

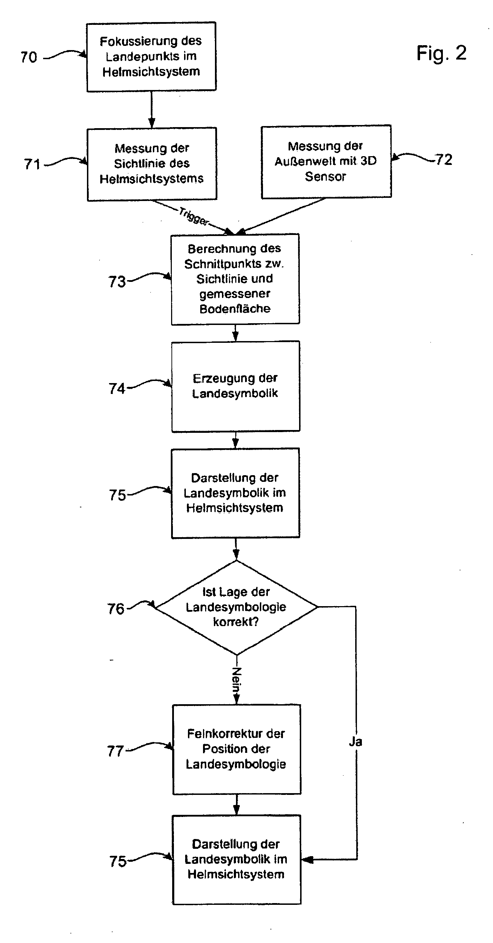

Der genaue Landepunkt wird durch Zielen bzw. Peilen auf den gewünschten Punkt auf der Erdoberfläche mittels des Helmsichtsystems festgelegt. Zu diesem Zweck wird in dem Helmsichtsystem, i.d.R. im Zentrum des Sichtfeldes, eine Art Fadenkreuz eingeblendet. Der Ablauf ist exemplarisch in Fig. 2 dargestellt. Der Pilot dreht seinen Kopf so, dass die angestrebte und von ihm ausgesuchte Landeposition mit dem Fadenkreuz übereinstimmt (Schritt 70). Die Ausrichtung dieser Sichtlinie wird vom Helmsichtsystem vorgenommen (Schritt 71). Daraufhin löst der Pilot einen Trigger, z.B. an einem Knopf an einem der Steuerknüppel des Luftfahrzeugs aus. Eine Prozessoreinheit erhält durch diesen Trigger die momentane Sichtlinie des Helmsichtsystems in luftfahrzeugfesten Koordinaten übermittelt. Diese Prozessoreinheit berechnet nun den Schnittpunkt der Sichtlinie (Schritt 73) mit der zur gleichen Zeit vom 3D-Sensor aufgenommenen Messpunktwolke der Bodenfläche (Schritt 72) und platziert ein Landepunktsymbol auf diese gemessene Bodenfläche (Schritte 74 und 75). Während des gesamten Anflugs kann der Pilot die korrekte Lage der Landesymbologie überprüfen (Schritt 76) und deren laterale Position gegebenenfalls korrigieren (Schritt 77). Diese Feinkorrektur fließt wiederum in die erneute Darstellung der Landesymbolik ein. Der Vorgang der Lagekontrolle und die Feinkorrektur kann auch mehrfach durchlaufen werden.

Fig. 3 zeigt maßstabsgerecht und exemplarisch die typischerweise auftretenden Entfernungen beim Landeanflug eines Helikopters. Das Luftfahrzeug 1 ist zum Zeitpunkt der Landepunktmarkierung typischerweise zwischen 400 und 800 m vom Landepunkt entfernt. Es spannt zu diesem Zeitpunkt ein luftfahrzeugfestes Koordinatensystem 2 auf. Die Sichtlinie des Helmsichtsystems 3 durchdringt die durch die 3D-Messpunktwolke 4 des 3D-Sensors erzeugte Bodenfläche.

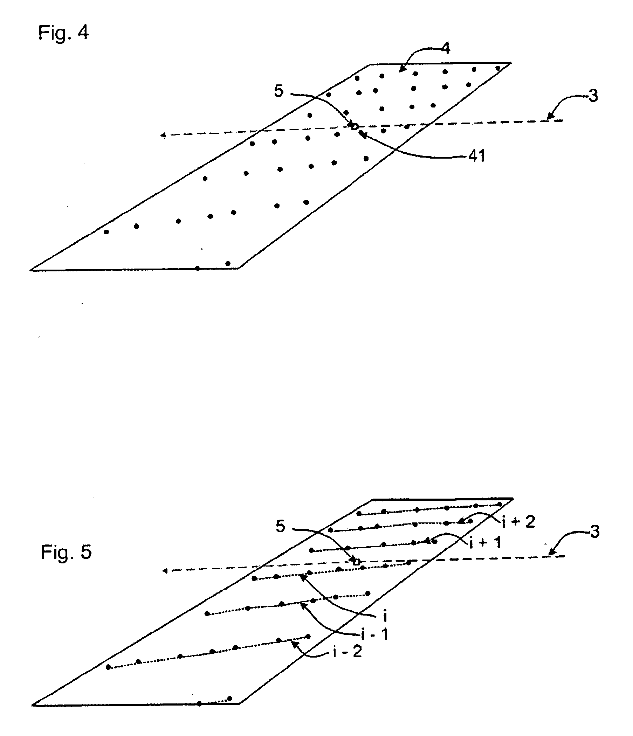

Betrachtet man den Schnittpunkt 5 (siehe Fig. 4) des Sichtstrahls 3 mit der 3D-Messpunktwolke 4 genauer, so wird deutlich, dass für jeden Winkel des Sichtstrahls 3 ein Messpunkt 41 gefunden werden kann, der dem Schnittpunkt am nächsten liegt. Zur Festlegung der Landeposition und somit der Platzierung der Landesymbolik muss nun eine Flächenapproximation der zur Bodenfläche gehörenden umliegenden Messpunkte vorgenommen werden. Bei der Berechnung dieser Flächenapproximation ist zu beachten, dass durch den typischerweise sehr flachen Sichtwinkel die Messpunkte eines äquidistant im Raum verteilten Messpunktfeldes stark verzerrt, bzw. gestreckt werden. Exemplarisch sei ein Markierungsabstand von 400 m bei einer Flughöhe von 30 m betrachtet. Wenn ein hochauflösender 3D-Sensor einen Messpunktabstand von 0,3° in horizontaler und vertikaler Richtung hat, so beträgt der Abstand zweier benachbarter Messpunkte unter diesen Bedingungen ca. 4 m quer zur Flugrichtung und ca. 25 m in Flugrichtung. Die Berechnung der Flächenapproximation der 3D-Messpunkte auf dem Boden muss also auf einem Messpunktensemble stattfinden, welches Punkte mit hinreichendem Abstand in beiden Raumrichtungen vorsieht. Vorteilhaft für einen Sensor mit Messpunkten in annähernd äquidistanten Raumwinkeln wird dafür ein Verfahren, wie folgt beschrieben, angesehen.

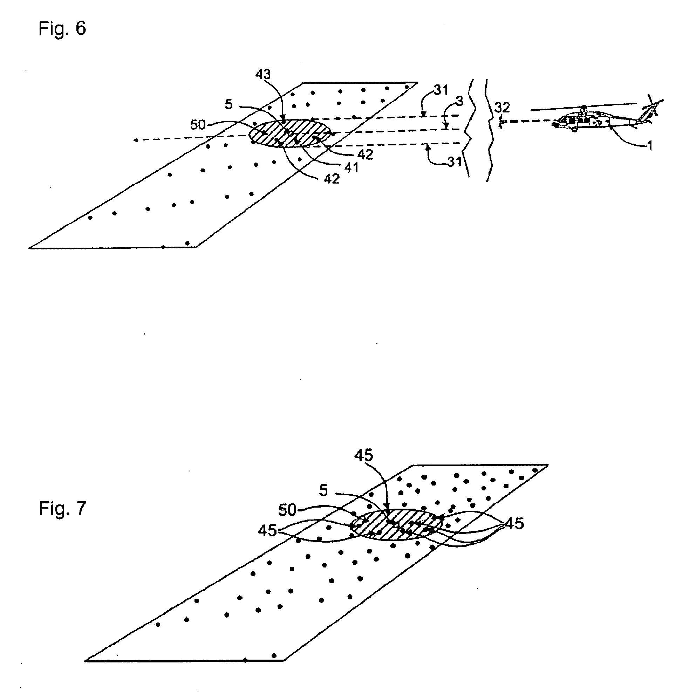

Seien ohne Beschränkung der Allgemeinheit die Messpunkte des 3D-Sensors in Spalten mit dem Index j und Zeilen mit dem Index i aufgeteilt (siehe Fig. 5). Vom 3D-Sensor wird für jeden Messpunkt mit dem Index i und j ein Entfernungswert, sowie ein Azimutwinkel *ψₛ* und ein Elevationswinkel *θₛ* direkt gemessen. Diese Messwinkel sollen bereits in einem luftfahrzeugfesten Koordinatensystem vorliegen (vgl. Bezugsziffer 2, Fig. 3) oder können in dieses umgerechnet werden. Vom Helmsichtsystem wird, wie oben beschrieben, ein Sichtwinkel, ebenfalls bestehend aus Azimutwinkel *ψ_{H}* und Elevationswinkel *θ_{H}* übermittelt. Diese Winkel werden typischerweise auch direkt im luftfahrzeugfesten Koordinatensystem gemessen. Sei weiter der in Fig. 4 und Fig. 6 mit dem Bezugspunkt 41 bezeichnete Messpunkt derjenige, dessen Winkel *ψ*_{*S*,*i*/*j*} und *θ*_{*S,i*/*j*} dem Sichtwinkel *ψ_{H}* und *θ_{H}* am nächsten liegen. Bezugspunkt 41 habe nun das Indexpaar i und j. Zur Berechnung einer Bodenflächenapproximation für die Landesymbolik werden nun alle Punkte berücksichtigt, deren Azimut- und Elevationswinkel innerhalb eines Winkelbereichs *ε* (siehe Bezugsziffer 32 in Fig. 6) um das Sichtwinkelpaar *ψ_{H}* und *θ_{H}* liegen. Diese Punkte sind in Fig. 6 mit den Bezugsziffern 41 und 42 bezeichnet. Der Winkelbereich *ε* ist vorteilhaft so zu wählen, dass er gleich oder größer dem Strahlabstand des 3D-Sensors ist. Damit wird sichergestellt, dass i.d.R. mindestens ein Punkt aus einer benachbarten Scanzeile (hier Bezugspunkt 43 in Fig. 6) mit in die Flächenberechnung eingeht.

Es stellt eine vorteilhafte Ausprägung des beschriebenen Verfahrens dar, wenn in die Berechnung der Approximation der Bodenfläche nur Messpunkte des 3D-Sensors eingehen, die vorher mit an sich bekannten Segmentierungsverfahren als Bodenmesswerte klassifiziert wurden. Dadurch können Fehler bei der Berechnung der Bodenfläche durch Messpunkte von erhabenen Objekten ausgeschlossen werden. Für dieses Verfahren kann es notwendig sein, den Winkelbereich *ε* so lange zu vergrößern, bis ein gültiger Bodenmesswert einer benachbarten Scanzeile mit einbezogen werden kann.

Durch die so gewonnene Menge an Messpunkten wird eine Bodenfläche approximiert. Der Schnittpunkt zwischen Sichtstrahl des Helmsichtsystems und dieser Bodenfläche wird vorteilhaft in einem luftfahrzeugfesten Koordinatensystem berechnet. Die darzustellende Landesymbolik wird auf die berechnete Bodenfläche platziert und der so ausgewählte Landepunkt liegt als geometrischer Ort im luftfahrzeugfesten Koordinatensystem vor.

Vorteilhaft an diesem Verfahren ist, dass die Messungen des 3D-Sensors im selben luftfahrzeugfesten Koordinatensystem (Bezugsziffer 2, Fig. 3) erfolgen, in dem auch die Sichtwinkelmessung des Helmsichtsystems stattfindet. Deshalb kann die Berechnung des Schnittpunkts zwischen Sichtstrahl und gemessener Bodenfläche vorteilhaft in relativen Winkeln und Entfernungen durchgeführt werden. Aus diesem Grund gehen vorteilhaft nur die sehr geringen statischen Orientierungsfehler von Helmsichtsystem und 3D-Sensor in eine Fehlerbetrachtung ein. Die Nick-, Roll- und Kurswinkel des Navigationssystems (und somit deren Fehler) gehen in die Ermittlung der gewünschten Landeposition nicht ein. Bei den bekannten, datenbankgestützten Verfahren benötigt man dagegen Nick-, Roll-und Kurswinkel des Navigationssystems sowie darüber hinaus die georeferenzierte Absolutpositionen des Luftfahrzeugs zur Landepunktsbestimmung.

### Darstellung der außensichtkonformen Symbologie des Landepunktes:

An der lokalen Position des erfindungsgemäß festgelegten Landepunktes wird nun ein zur Außensicht konformes, dem Piloten vertrautes, bekanntes Landesymbol perspektivisch korrekt auf die Landefläche projiziert. Bevorzugt werden hier Symbole, die die Außensicht durch das Helmsichtsystem möglichst wenig beeinträchtigen. Aus diesem Grund wird im vorliegenden Verfahren auf die Darstellung der Landefläche durch ein Bodengitternetz bewusst verzichtet. Der Landepunkt selbst wird durch ein am Boden auf der Landefläche projiziertes Symbol in eindeutiger Art und Weise markiert. Dies kann vorteilhaft durch ein "H", durch ein "T" ("NATO-T") oder ein auf dem Kopf stehendes "Y" ("NATO inverted-Y") erfolgen. Diese Symbole sind (Militär-)Piloten vertraut und ein Landeanflug auf diese Symbole, deren Größe, Orientierung und Proportionen in der realen Welt bekannt sind, ist Pilotenroutine. Aus diesem Grund gibt die perspektivische Verkürzung des jeweiligen Symbols im Helmsichtsystem dem Piloten einen präzisen Eindruck vom Anflugwinkel (slope angle). Zusätzlich beschreibt die Ausrichtung des Symbols die gewünschte Anflugrichtung. Wegen der aufgeführten Zusammenhänge vermindert sich vorteilhaft der Trainingsaufwand eines Piloten für den Umgang mit der erfindungsgemäßen außensichtkonformen Symbologie.

Der nach dem oben beschriebenen Verfahren in luftfahrzeugfesten Koordinaten festgelegte Landepunkt wird für den Anflug in einem lokalen, erdfesten Relativkoordinatensystem fixiert. Alle Positionsänderungen des Luftfahrzeugs ab dem Zeitpunkt der Landepunktfestlegung werden relativ zu einem lokalen Ausgangspunkt betrachtet. Der momentane Ortsunterschied zum festgelegten Landepunkt ergibt sich durch eine Positionsänderung des Luftfahrzeugs, welche sich aus der Integration der vektoriellen Geschwindigkeit des Luftfahrzeugs unter Berücksichtigung der Lageänderungen über der Zeit ab einem Nullzeitpunkt einfach errechnet. Auch hier ist es eine vorteilhafte Eigenschaft, dass nur Positionsfehler relativ zu diesem lokalen Ausgangspunkt (z.B. die Position des Luftfahrzeugs zum Zeitpunkt der Festlegung des Landepunkts) relevant sind. Ein solches Koordinatensystem wird folgend erdfestes Relativkoordinatensystem genannt.

Während des Landeanflugs auf die ausgewählte Landeposition werden fortlaufend 3D-Daten des 3D-Sensors aufgenommen. Diese werden in das erdfeste Relativkoordinatensystem transformiert und können hier auch vorteilhaft über mehrere Messzyklen akkumuliert werden. Analog dem oben beschriebenen erfindungsgemäßen Verfahren zur Festlegung des Landepunktes werden Messpunkte in einem vordefinierten Umkreis 50 um den definierten Landepunkt 5 (Fig. 7 und 8), die als Bodenmesspunkte 45 klassifiziert wurden, zur fortlaufenden Berechnung der Bodenfläche 60 (Fig. 8) durch Flächenapproximation 101 herangezogen. Das ausgewählte Symbol 170 für den Landepunkt wird dann auf diese Bodenfläche 60 perspektivisch korrekt projiziert. Da die Bodenfläche in der Regel mit umso besserer Auflösung vom 3D-Sensor abgetastet werden kann, je näher man dieser Fläche kommt, hat dieses Vorgehen den Vorteil, dass die Messgenauigkeit im selben Maß skaliert, in dem die Anforderung an die Darstellungsgenauigkeit im Helmsichtsystem skaliert. Die Landesymbolik im erdfesten Relativkoordinatensystem wird wiederum mit Hilfe der Lagewinkel und Geschwindigkeitsmessungen der Navigationsanlage zurück in das luftfahrzeugfeste Koordinatensystem transformiert. Nach der Rücktransformation wird die Landesymbolik an das Helmsichtsystem übermittelt und von diesem entsprechend dargestellt. Die Rücktransformation erlaubt eine stets aktuelle, perspektivisch korrekte sowie außensichtkonforme Darstellung der Landesymbolik im Helmsichtsystem des Piloten.

Da die Darstellung der Landesymbolik während des gesamten finalen Landeanflugs erfolgt, also auch über längere Zeit unter normalen Sichtbedingungen, erlaubt dies dem Piloten vorteilhaft, während des Anflugs die Korrektheit der Symbolik zu überwachen, d.h. es wird für den Piloten offensichtlich, ob die Landesymbolik auch tatsächlich konform zur realen Bodenfläche der Außensicht liegt. Bei Abweichungen oder Korrekturwünschen kann der Pilot die Position der Symbolik über eine Steuereinheit, wie in Bezugsziffer 13 in Fig. 1 dargestellt, z.B. mittels einer Art Joystick wunschgemäß lateral verschieben.

Bei Verwendung eines optischen 3D-Sensors, wie z.B. eines Ladars, werden im Falle von plötzlich eintretenden aber für einen optischen Sensor nur schwer zu durchdringenden Sichtbehinderungen durch Brownout oder Whiteout i.d.R. keine neuen Messwerte zur Berechnung der Bodenfläche mehr hinzugefügt, sobald das Luftfahrzeug in die Sichtbehinderung eintaucht. In diesem Fall kann die vor Eintritt in die Sichtbehinderung gewonnene Bodenfläche des aktiven 3D-Sensors weiter verwendet werden, die mit den Daten der Navigationsanlage des Luftfahrzeugs lagekorrigiert wird.

Ebenfalls möglich ist es, nur solche Daten des 3D-Sensors zu verwenden, für die durch Verfahren zuverlässig sichergestellt wurde, dass sie keine Fehlmessungen von Staub- oder Schneepartikeln darstellen.

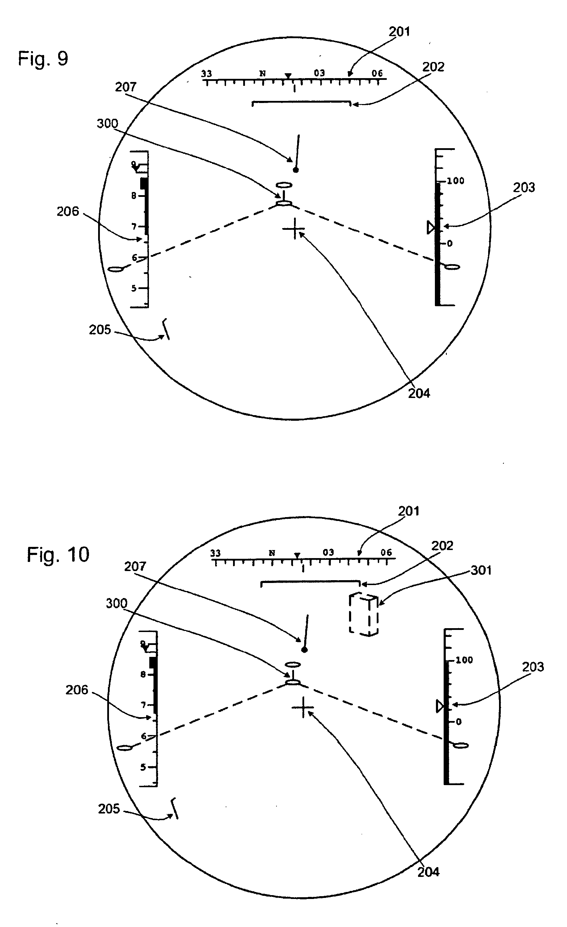

Die Verwendung der oben beschriebenen Symbole, besonders des "T"-Symbols und des auf dem Kopf stehenden "Y" erlaubt es, auch auf Helmsichtsystemen eine derartige Symbolik anzuzeigen, die nur eine beschränkte Anzahl an Symbolen zusätzlich zu bereits existierenden Flugführungssymbolen anzeigen können. Beispielsweise benötigt man zum Zeichnen des auf dem Kopf stehenden "Y" nur 4 Kreise für die Stützstellen und ggf. 3 Linien für die Verbindungen. Fig. 9 zeigt exemplarisch die Darstellung des auf dem Kopf stehenden "Y" 300 zusammen mit einer Standard-Flugführungssymbologie: Kompass 201, Horizontlinie 202, Höhe über Grund 203, Zentrum des Helmsichtsystems 204, Windrichtung 205, Triebwerksanzeige 206, Driftvektor 207.

Es stellt eine vorteilhafte Ausprägung des beschriebenen Verfahrens dar, wenn die Daten für die außensichtkonforme Symbologie und die Daten für die Flugführungssymbologie aus unterschiedlichen Quellen stammen. Das bedeutet, dass beispielsweise die Flugführungssymbologie aus Navigationsdaten vom Helmsichtsystem direkt erzeugt wird, während Daten für die außensichtkonforme Symbologie von einer separaten Prozessoreinheit erzeugt und als Zeichenkoordinaten an das Helmsichtsystem gesendet werden.

### Darstellung der außensichtkonformen Symbologie zusätzlicher Orientierungshilfen:

Erfindungsgemäß wird weiterhin vorgeschlagen, zusätzliche außensichtkonforme Referenzobjekte oder Orientierungshilfen nicht als rein virtuelles Symbol ohne konkreten Bezug zur Außenwelt, sondern abgeleitet von realen Objekten der Landezone darzustellen.

In den meisten Fällen sind im Bereich vor dem festgelegten Landepunkt Objekte, die deutlich vom Boden erhaben sind, wie z.B. Büsche, Bäume, Fahrzeuge, Häuser, Mauern o.ä. vorhanden. Das erfindungsgemäße Verfahren wählt aus den vorhandenen erhabenen Objekten das oder die am besten als visuelle Orientierungshilfe geeigneten Objekte aus. Dazu ist vom Verfahren zu berücksichtigen, dass sich als Orientierungshilfe geeignete Objekte im Halbraum vor dem festgelegten Landepunkt befinden. Geeignete Orientierungshilfen dürfen außerdem nicht zu klein, aber auch nicht zu groß sein, da sie sonst ihren Nutzen als visuelle Referenz während des Landeanfluges verlieren. Vorteilhaft kann um das oder die geeigneten erhabenen Objekte eine dreidimensionale Umhüllende, vorzugsweise eine einfache geometrische Grundform wie Quader, Kegel oder Zylinder gezeichnet werden. Ein geeignetes Referenzobjekt wird als visuelle Orientierungshilfe auf die aus 3D-Sensordaten berechnete Bodenfläche positionsgenau plaziert und in der Folge außensichtkonform nachgeführt und entsprechend dargestellt.

Zum Zeitpunkt der Festlegung des Landepunkts durch Helmsichtpeilung können zunächst alle vom Sensor erfassten, über die Bodenfläche erhabenen Objekte aus den 3D-Daten segmentiert werden. Für jedes so segmentierte Objekt wird die Entfernung zum Landepunkt sowie die Richtung des Objektstandorts zur Landerichtung ermittelt. Zusätzlich wird die Ausdehnung quer zur Flugrichtung und die Objekthöhe bestimmt. Diese und eventuell weitere Objekteigenschaften fließen in eine Gewichtungsfunktion ein, die dazu dient, die am besten geeignete Orientierungshilfe aus einer eventuell vorhandenen Menge an erhabenen Objekten auszuwählen. Exemplarisch sei der Einfluss von einigen dieser Größen qualitativ beschrieben: Ein zu kleines oder zu weit entferntes Objekt bietet zu wenige Anhaltspunkte zur Orientierung. Andererseits kann ein zu großes Objekt zum Landezeitpunkt nicht mehr genügend Struktur bieten, um eine ausreichende Orientierungshilfe darzustellen. Bevorzugt sollten Objekte gefunden werden, die sich möglichst im direkten Sichtfeld des Helmsichtsystems zum Landezeitpunkt befinden, damit der Pilot nicht den Kopf drehen muss, um die Orientierungshilfe zu sehen. All diese Kriterien münden in einer geeigneten Gewichtungsformel, welche die Eignung von Referenzobjekten als Orientierungshilfen bei der Landung würdigt und in einem Gütemaß quantifiziert. Existieren mehrere Objekte mit einem Gütemaß über einer festgelegten Schwelle, d.h. als außensichtkonforme Orientierungshilfe geeignete Objekte, wird dasjenige zur weiteren Verarbeitung und Darstellung gewählt, das den höchsten Wert des Gütemaßes besitzt.

Für die Berechnung und Darstellung des umhüllenden Quaders um das als Orientierungshilfe selektierte Objekt wird für die zugehörigen Datenpunkte beispielsweise deren Hauptachse berechnet. Für diese wird dann die maximale Ausdehnung der zugehörigen Datenpunkte in allen drei Raumrichtungen gesucht. Entsprechend wird ein Quader mit dieser Ausrichtung und den maximalen Ausdehnungen gezeichnet, der auf der gemessenen Bodenfläche steht. Die Position und Ausdehnung dieses Quaders in erdfesten Relativkoordinaten wird für den gesamten Anflug bis zur vollendeten Landung beibehalten.

Es kann ebenfalls von Vorteil sein, im Falle von sehr großen vorhandenen Objekten diese algorithmisch in Teilobjekte aufzuspalten, damit die entstehende Orientierungshilfe eine optimale Größe erhält. Beispielsweise kann von einer langen quer verlaufenden Mauer ein Teilstück abgespalten und dargestellt werden.

Fig. 10 zeigt beispielhaft ein außensichtkonformes Symbol 300 des Landepunkts und einer zusätzlichen, ebenfalls außensichtkonformen, quaderförmigen Orientierungshilfe 301, die als Umhüllende um ein reales Objekt gelegt wurde.

Eine mögliche vorteilhafte Ausprägung des vorgeschlagenen Verfahrens kann sein, mehr als eine Orientierungshilfe einzuzeichnen. In diesem Fall werden entweder die am besten geeigneten erhabenen Objekte oder alle erhabenen Objekte mit einem Gütemaßwert über einer vorgegebenen Schwelle mit umhüllenden Quadern versehen und eingezeichnet.

In einer weiteren vorteilhaften Ausprägung können alternativ zu dem genannten Quader auch andere geometrische Grundformen als Orientierungshilfe verwendet werden, z.B. Zylinder oder Kegel. Auch eine Mischung verschiedener geometrische Grundformen oder eine objektabhängige Auswahl der geometrischen Form der Umhüllenden ist im Rahmen des vorgestellten Verfahrens vorteilhaft möglich.

Zusätzlich zu den beschriebenen, von erhabenen, realen Objekten innerhalb oder vor der Landezone abgeleiteten Symbolen kann auch ein rein virtuelles Symbol verwendet werden, welches keinen direkten Bezug zu einem realen Objekt der Landezone hat. Dieses wird ebenfalls außensichtkonform im Helmsichtsystem dargestellt. Eine derartige Orientierungshilfe kann insbesondere in einem Fall eingesetzt werden, bei dem sich überhaupt kein erhabenes reales Objekt im Bereich des festgelegten Landepunktes befindet. Es ist aber auch möglich, ein solches rein virtuelles Symbol zusätzlich zu den oben beschriebenen, von einem realen Objekt der Landezone abgeleiteten Symbolen zu verwenden.

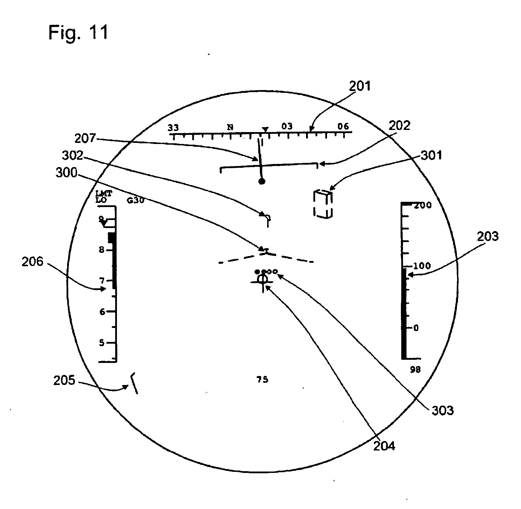

Vorteilhaft wird ein Symbol gewählt, welches den Piloten aus Standardanflügen unter Sichtflugbedingungen bekannt ist und als zusätzlicher räumlicher Referenz-und Orientierungspunkt dienen kann. Hierfür wird die Verwendung eines dreidimensionalen Symbols in Form eines Windsacks (Bezugsziffer 302 in Fig.11). vorgeschlagen, wie er typischerweise neben einem regulären Hubschrauberlandeplatz steht. Die geometrischen Abmessungen eines solchen Windsacks sind aufgrund geltender Standards den Piloten wohlbekannt. Die Windrichtung wird implizit als zusätzliche Information übermittelt, in dem der virtuelle Windsack sich entsprechend der aktuellen Windrichtung in der Helmsichtdarstellung ausrichtet.

Als weitere Ausführung für ein rein virtuelles Symbol, welches keine reale Entsprechung in einem Objekt der Landezone hat, kann im Helmsichtsystem ein Gleitwinkelfeuer außensichtkonform dargestellt werden. Damit kann dem Piloten eine Unterstützung bei der Einhaltung des korrekten Anflugwinkels gegeben werden.

Bei einem Gleitwinkelfeuer handelt es sich um ein in der Luftfahrt gebräuchliches optisches System, welches die Einhaltung des korrekten Gleitpfades im Anflug auf eine Landebahn unterstützt. Zur Darstellung gemäß der Erfindung eigenen sich dabei die Verfahren VASI (Visual Approach Slope Indicator) oder PAPI (Precision Approach Path Indicator), bei denen im Original eine Lampenreihe je nach Anflugwinkel zum Landepunkt ihre Lampenfarbe ändert.

Besonders geeignet erscheint die Darstellung des Gleitpfadwinkels durch vier im PAPI- System vorgesehene "Lampen" in rot oder weiß. Bei einem korrekten Gleitpfadwinkel sind die zwei linken Lampen rot, die beiden rechten weiß. Bei einer zu tiefen Position des Luftfahrzeugs in Bezug auf den gewünschten Gleitpfad werden auch die dritte und vierte Lampe rot, bei einer zu hohen Position werden die dritte und vierte Lampe weiß.

Ein derartiges System lässt sich auch in einem monochromen Helmsichtsystem umsetzen, indem man eine weiße Lampe als Kreis und eine rote Lampe als ausgefüllten Kreis oder Kreis mit Kreuz darstellt (siehe Bezugsziffer 303 in Fig. 11. Bei Verwendung eines Helmsichtsystems mit der Möglichkeit einer farblichen Darstellung verwendet man vorteilhaft die Farben rot und weiß, die der Pilot aus seiner Flugpraxis kennt. Besonders bei Nutzung des vorgeschlagenen Systems für Brownout und Whiteout Landungen schreiben die vorhandenen Landeprozeduren einen sehr engen Korridor für den Gleitpfad vor, der durch eine auf diese Gleitpfadwinkel leicht modifizierte "PAPI" Symbolik vorteilhaft unterstützt wird.

Beide vorgeschlagenen, außensichtkonformen Symbole (Windsack und Gleitwinkelfeuer ) haben den Vorteil, dass deren Verwendung sehr intuitiv erfolgen kann, da ihre Nutzung den Piloten aus ihrer Ausbildung und Flugpraxis wohlbekannt ist und die Arbeitsbelastung während des Anflugs vorteilhaft verringert.

## Patentansprüche

1. Verfahren zur Pilotenunterstützung für die Landung eines Luftfahrzeugs unter Sichtbehinderungen, wobei die Position des Landepunkts mittels eines bewegungskompensierten, luftfahrzeuggestützten Helmsichtsystems während des Landeanflugs festgelegt wird durch Anpeilen dieses Landepunktes durch den Piloten entlang seiner Sichtlinie, und der Landepunkt durch die Erzeugung von außensichtkonformen Symbolen auf einer Bodenfläche in dem Helmsichtsystem dargestellt wird, **dadurch gekennzeichnet, dass**
- die Erzeugung oder Berechnung der Bodenfläche auf im Anflug erzeugten Messdaten eines luftfahrzeuggestützten 3D-Sensors beruht, wobei der Landepunkt durch Berechnung des Schnittpunkts der Sichtlinie des Piloten mit der so erzeugten Bodenfläche ermittelt wird,
- wobei sowohl die Erzeugung der 3D-Messdaten der Bodenfläche als auch die Festlegung des Landepunkts bezogen auf dasselbe luftfahrzeugfeste Koordinatensystem erfolgt.

2. Verfahren nach Anspruch 1, **dadurch gekennzeichnet, dass** die geometrischen Positionsdaten der Landepunkt-Symbole sowohl in dem luftfahrzeugfesten Koordinatensystem als auch in einem lokalen, erdfesten Relativkoordinatensystem berechnet werden, wobei für die Umrechnung zwischen diesen beiden Koordinatensystemen die momentane Lage im Raum sowie die momentane Position des Luftfahrzeugs verwendet wird, die sich aus den relativen Positionsänderungen des Luftfahrzeugs bezogen auf dessen Position zu einem gewählten Referenzzeitpunkt ergibt.

3. Verfahren nach Anspruch 1 oder 2, **dadurch gekennzeichnet, dass** die Festlegung des Landepunkts durch Anpeilen dieses Landepunktes im Helmsichtsystem und anschließendes Markieren durch einen Trigger erfolgt.

4. Verfahren nach einem der vorangehenden Ansprüche, **dadurch gekennzeichnet, dass** die Position des im Helmsichtsystem dargestellten Landepunkt-Symbols über ein Steuerungselement korrigiert werden kann.

5. Verfahren nach einem der vorangehenden Ansprüche, **dadurch gekennzeichnet, dass** die Landepunkt-Symbole die Form eines H oder eines T oder eines invertierten Y bilden.

6. Verfahren nach einem der vorangehenden Ansprüche, **dadurch gekennzeichnet, dass** mindestens eine zusätzliche außensichtkonforme, visuelle Orientierungshilfe in Form eines 3D-Objektes im Helmsichtsystem dargestellt wird, welche von einem realen Objekt innerhalb einer Umgebung des Landepunktes abgeleitet wurde.

7. Verfahren nach Anspruch 6, **dadurch gekennzeichnet, dass** die 3D-Daten des realen Objekts durch den 3D-Sensor im Anflug erzeugt wurden.

8. Verfahren nach Anspruch 6 oder 7, **dadurch gekennzeichnet, dass** die Orientierungshilfe als Umhüllende des realen Objekts ausgebildet ist.

9. Verfahren nach Anspruch 6, 7 oder 8, **dadurch gekennzeichnet, dass** die Orientierungshilfe eine geometrische Grundform wie z.B. die eines Quaders, Kegels öder Zylinders oder eine Kombination daraus annimmt.

10. Verfahren nach einem der Ansprüche 6 bis 9, **dadurch gekennzeichnet, dass** bei mehreren realen Objekten innerhalb der Landezone mittels eines Bewertungsalgorithmus deren Eignung als Orientierungshilfe ermittelt wird und nur die am besten geeigneten Objekte für die Darstellung verwendet werden.

11. Verfahren nach einem der Ansprüche 1 bis 5, **dadurch gekennzeichnet, dass** eine zusätzliche außensichtkonforme, synthetische Orientierungshilfe in Form eines virtuellen Windsacks im Helmsichtsystem dargestellt wird.

12. Verfahren nach einem der Ansprüche 1 bis 5, **dadurch gekennzeichnet, dass** zur Unterstützung des Anflugs mit korrektem Gleitpfadwinkel eine zusätzliche außensichtkonforme, synthetische Orientierungshilfe in der Form eines virtuellen Gleitwinkelfeuers gemäß VASI (Visual Approach Slope Indicator) oder PAPI (Precision Approach Path Indicator) im Helmsichtsystem dargestellt wird.

13. Verfahren zur Pilotenunterstützung für die ferngesteuerte Landung eines Luftfahrzeugs unter Sichtbehinderungen, wobei dem femsteuernden Piloten die Ansicht der Szene mittels eines bewegungskompensierten, luftfahrzeuggestützten Kamerasystems vermittelt wird, und wobei die Position des Landepunkts während des Landeanflugs festgelegt wird durch Vorgabe einer bestimmten Sichtlinie des Kamerasystems durch den fernsteuernden Piloten, und der Landepunkt durch die Erzeugung von außensichtkonformen Symbolen auf einer Bodenfläche in einem vom Kamerasystem erzeugten Bild der Szene dargestellt wird, wobei
- die Erzeugung oder Berechnung der Bodenfläche auf im Anflug erzeugten Messdaten eines luftfahrzeuggestützten 3D-Sensors beruht, wobei der Landepunkt durch Berechnung des Schnittpunkts der Sichtlinie des Kamerasystems mit der so erzeugten Bodenfläche ermittelt wird,
- wobei sowohl die Erzeugung der 3D-Messdaten der Bodenfläche als auch die Festlegung des Landepunkts bezogen auf dasselbe luftfahrzeugfeste Koordinatensystem erfolgt.

## Claims

1. Method for pilot assistance for the landing of an aircraft in restricted visibility, with the position of the landing point being defined by means of a motion-compensated, aircraft-based helmet sight system during the landing approach by the pilot finding the bearing of this landing point along said pilot's line of sight, and with the landing point being displayed on a ground surface in the helmet sight system by the production of symbols which conform with the outside view, **characterized in that**
- the production or calculation of the ground surface is based on measurement data, produced during the approach, from an aircraft-based 3D sensor, with the landing point being determined by the calculation of the point of intersection of the pilot's line of sight with the ground surface produced in this way,
- with both the production of the 3D measurement data of the ground surface and the definition of the landing point being provided with reference to the same aircraft-fixed coordinate system.

2. Method according to Claim 1, **characterized in that** the geometric position data of the landing point symbols is calculated both in the aircraft-fixed coordinate system and in a local, ground-fixed relative coordinate system, with the instantaneous position in space as well as the instantaneous position of the aircraft being used for conversion between these two coordinate systems, which instantaneous position of the aircraft results from the relative position changes of the aircraft with respect to its position at a selected reference time.

3. Method according to Claim 1 or 2, **characterized in that** the landing point is defined by finding the bearing of this landing point in the helmet sight system and subsequent marking by means of a trigger.

4. Method according to one of the preceding claims, **characterized in that** the position of the landing point symbol which is displayed in the helmet sight system can be corrected via a control element.

5. Method according to one of the preceding claims, **characterized in that** the landing point symbols are in the form of an H, a T or an inverted Y.

6. Method according to one of the preceding claims, **characterized in that** at least one additional visual orientation aid, which conforms with the outside view, is displayed in the form of a 3D object in the helmet sight system, having been derived from a real object within an area around the landing point.

7. Method according to Claim 6, **characterized in that** the 3D data of the real object was produced by the 3D sensor during the approach.

8. Method according to Claim 6 or 7, **characterized in that** the orientation aid is in the form of an envelope of the real object.

9. Method according to Claim 6, 7 or 8, **characterized in that** the orientation aid assumes a geometric basic shape such as a cuboid, cone or cylinder, or a combination thereof.

10. Method according to one of Claims 6 to 9, **characterized in that**, when there are a plurality of real objects within the landing zone, their suitability as an orientation aid is determined by means of an assessment algorithm, and only those objects which are most suitable are used for the display.

11. Method according to one of Claims 1 to 5, **characterized in that** an additional, synthetic orientation aid, which conforms with the outside view, is displayed in the form of a virtual wind sock in the helmet sight system.

12. Method according to one of Claims 1 to 5, **characterized in that** an additional synthetic orientation aid, which conforms with the outside view, is displayed in the form of a virtual glide angle beacon based on VASI (Visual Approach Slope Indicator) or PAPI (Precision Approach Path Indicator) in the helmet sight system, in order to assist the approach at the correct glide-path angle.

13. Method for pilot assistance for the remotely controlled landing of an aircraft in restricted visibility, with the view of the scene being conveyed to the remotely controlling pilot by means of a motion-compensated, aircraft-based camera system, and with the position of the landing point being defined during the landing approach by a specific line of sight of the camera system being predetermined by the remotely controlling pilot, and the landing point being displayed on a ground surface in an image of the scene, said image being produced by the camera system, by the production of symbols which conform with the outside view,
- the production or calculation of the ground surface being based on measurement data, produced during the approach, from an aircraft-based 3D sensor, with the landing point being determined by the calculation of the point of intersection of the line of sight of the camera system with the ground surface produced in this way,
- with both the production of the 3D measurement data of the ground surface and the definition of the landing point being provided with reference to the same aircraft-fixed coordinate system.

## Revendications

1. Procédé d'aide au pilotage pour l'atterrissage d'un aéronef en cas de vision dégradée, dans lequel la position du point d'atterrissage est déterminée au moyen d'un système d'affichage tête haute à mouvement compensé monté sur aéronef pendant l'approche d'atterrissage en faisant en sorte que le pilote vise ce point d'atterrissage le long de sa ligne de visée, et que le point d'atterrissage soit affiché dans le système d'affichage tête haute en générant des symboles conformes à une vue extérieure sur une surface du sol, **caractérisé en ce que** :
- la génération ou le calcul de la surface du sol repose sur des données de mesure générées par un capteur 3D embarqué sur aéronef pendant l'approche, le point d'atterrissage étant déterminé par calcul du point d'intersection de la ligne de visée du pilote avec la surface du sol ainsi générée,
- dans lequel la génération des données de mesure 3D de la surface du sol et l'établissement du point d'atterrissage s'effectuent par rapport au même système de coordonnées lié à l'aéronef.

2. Procédé selon la revendication 1, **caractérisé en ce que** les données géométriques de position des symboles des points d'atterrissage sont calculées à la fois dans le système de coordonnées lié à l'aéronef et dans un système de coordonnées relatif local lié au sol, dans lequel, pour la conversion entre ces deux systèmes de coordonnées, on utilise la position instantanée dans l'espace ainsi que la position instantanée de l'aéronef qui résulte des variations de position relative de l'aéronef par rapport à sa positon en un point de référence sélectionné.

3. Procédé selon la revendication 1 ou 2, **caractérisé en ce que** la détermination du point d'atterrissage s'effectue en visant ce point d'atterrissage dans le système d'affichage tête haute puis en le marquant au moyen d'une gâchette.

4. Procédé selon l'une quelconque des revendications précédentes, **caractérisé en ce que** la position du symbole du point d'atterrissage représenté dans le système d'affichage tête haute peut être corrigée par l'intermédiaire d'un élément de commande.

5. Procédé selon l'une quelconque des revendications précédentes, **caractérisé en ce que** les symboles des points d'atterrissage présentent la forme d'un H ou d'un T ou d'un Y inversé.

6. Procédé selon l'une quelconque des revendications précédentes, **caractérisé en ce qu'**au moins une aide à l'orientation visuelle supplémentaire conforme à une vision extérieure sous forme d'un objet 3D est représentée dans le système d'affichage tête haute, laquelle aide est déduite d'un objet réel à l'intérieur d'un voisinage du point d'atterrissage.

7. Procédé selon la revendication 6, **caractérisé en ce que** les données 3D de l'objet réel sont générées pendant l'approche par le capteur 3D.

8. Procédé selon la revendication 6 ou 7, **caractérisé en ce que** l'aide à l'orientation est réalisée sous la forme d'habillages de l'objet réel.

9. Procédé selon la revendication 6, 7 ou 8, **caractérisé en ce que** l'aide à l'orientation est une forme géométrique de base comme par exemple celle d'un parallélépipède rectangle, d'un cône ou d'un cylindre ou d'une combinaison de ceux-ci.

10. Procédé selon l'une quelconque des revendications 6 à 9, **caractérisé en ce que**, lorsque plusieurs objets réels sont présents à l'intérieur de la zone d'atterrissage, leur aptitude à être utilisés en tant qu'aide à l'orientation est déterminée au moyen d'un algorithme d'évaluation et **en ce qu'**on n'utilise que les objets les plus appropriés pour la représentation.

11. Procédé selon l'une quelconque des revendications 1 à 5, **caractérisé en ce qu'**une aide à l'orientation synthétique supplémentaire conforme à une vision extérieure est représentée dans le système d'affichage tête haute sous la forme d'une manche à aire virtuelle.

12. Procédé selon l'une quelconque des revendications 1 à 5, **caractérisé en ce que**, pour l'assistance d'approche, une aide à l'orientation synthétique supplémentaire conforme à une vision extérieure est représentée dans le système d'affichage tête haute avec un angle d'alignement de descente correct sous la forme d'un feu d'angle de descente virtuel conformément à un indicateur VASI (Visual Approach Slope Indicator) ou PAPI (Precision Approach Path Indicator).

13. Procédé d'aide au pilotage pour l'atterrissage télécommandé d'un aéronef en cas de vision dégradée, dans lequel la vue de la scène est transmise au pilote effectuant la télécommande au moyen d'un système de caméra à mouvement compensé embarqué sur aéronef, et dans lequel la position du point d'atterrissage est déterminée pendant l'approche d'atterrissage en faisant en sorte que le pilote effectuant la télécommande spécifie une ligne de visée déterminée du système de caméra, et le point d'atterrissage est représenté en générant des symboles conformes à une vue extérieure sur une surface du sol dans une image générée par le système de caméra, dans lequel :
- la génération ou le calcul de la surface du sol repose sur des données de mesure générées par un capteur 3D embarqué sur aéronef pendant l'approche, le point d'atterrissage étant déterminé par calcul du point d'intersection de la ligne de visée du système de caméra avec la surface du sol ainsi générée,
- dans lequel la génération des données de mesure 3D de la surface du sol et l'établissement du point d'atterrissage s'effectuent par rapport au même système de coordonnées lié à l'aéronef.
